# EUROPÄISCHE PATENTANMELDUNG

(11) **EP 1 892 226 A2**
(43) Veröffentlichungstag der Anmeldung: **27.02.2008**
(21) Anmeldenummer: 06023430.9
(22) Anmeldetag: 10.11.2006
(51) Int. Cl.: C04B 28/18

(54) **Verfahren zur Reduzierung der Wärmeleitfähigkeit von Bausteinen aus einem kalzium-Silikate-Material sowie Baustein aus einem Kalzium-Silikat-Material mit verbesserter Wärmeleitfähigkeit**

(30) Priorität: 25.08.2006 EP 06017747
(71) Anmelder: H+H Deutschland GmbH, 23829 Wittenborn (DE)
(72) Erfinder: Ehlebracht, Thomas, 23795 Bad Segeberg (DE); Klemm, Robert, 09123 Chemnitz-Einsiedel (DE); Qvaeschning, Dirk, 23795 Bad Segeberg (DE)
(74) Vertreter: von Eichel-Streiber, Caspar

(57) **Zusammenfassung**

Um ein Verfahren anzugeben, mit dem bei einem Bausteinen aus einem Kalzium-Silikat-Material, insbesondere bei einem Porenbetonstein, die Wärmeleitfähigkeit noch weiter reduziert werden kann, ohne dass sich die statischen Eigenschaften der Bausteine wesentlich verändern, wird vorgeschlagen, dass von, dadurch gekennzeichnet, dass in den Bausteine Partikel eines mikro- oder nanoporösen Materials eingebracht werden, welche während der Herstellung des Bausteines einem oder mehreren der Ausgangsmaterialien und/oder einem oder mehreren Zwischenprodukten zugegeben und so bei einer nachfolgenden Herstellung des fertigen Bausteines in diesen eingebunden werden. Ferner wird ein Baustein mit entsprechend verbesserten Eigenschaften angegeben.

## Beschreibung

Die Erfindung betrifft ein Verfahren zur Reduzierung der Wärmeleitfähigkeit von Bausteinen aus einem Kalzium-Silikat-Material, insbesondere von Porenbetonsteinen, gemäß dem Oberbegriff des Patentanspruches 1. Die Erfindung betrifft ferner einen Baustein aus einem Kalzium-Silikat-Material, vorzugsweise aus Porenbeton.

Kalzium-Silikat basierende Bausteine sind als Baumaterialien bekannt und werden vielfach genutzt. So werden insbesondere Bausteine aus sogenanntem Porenbeton, auch AAC (Autoclaved Aerated Concrete), bzw. veraltet Gasporenbeton oder Gasbeton genannt, verwendet, um hieraus Steinbauten zu errichten. Unter "Bausteinen" im Sinne dieser Anmeldung sollen nicht nur die bekannten und üblichen Quader zum Errichten von Mauern verstanden werden, sondern auch Schlusssteine zum Überdecken von Tür- bzw. Fensteröffnungen, Fertigelemente zum Errichten größerer Einheiten oder Fertighäuser, plattenförmige Elemente als Deckenplatten und dgl. dreidimensionale Elemente, die zum Errichten von Hallen, Häusern und dgl. Gebäude bzw. zum Innenausbau derselben Verwendung finden.

Kalzium-Silikat basierende Bausteine, insbesondere Porenbeton erfreut sich in der Bauwirtschaft einer hohen Beliebtheit, da sie ein zügiges Errichten von Gebäuden ermöglichen und sehr gute Eigenschaften aufweisen. So ist bekannt, dass insbesondere Porenbeton aufgrund der in diesem Material eingeschlossenen Luft- bzw. Gasbläschen bereits hervorragende wärmeisolierende Eigenschaften hat. Es hat aber auch einen vergleichsweise niedrigen Wasserdampfdiffusionswiderstand, so dass es auch hinsichtlich der Feuchtigkeit zu einem guten Innenklima der mit diesen Bausteinen errichteten Gebäude beiträgt.

Aufgrund der gestiegenen Energiekosten und des allgemeinen Bestrebens, den Energieverbrauch zu senken, welches sich nicht zuletzt in stets schärferen Wärmeschutz-Vorschriften im Bauwesen äußert, besteht ein Bedürfnis, die Wärmeleitfähigkeit von Bausteinen noch weiter zu senken, um beim fertigen Bau einen Wärmeverlust (in einer Heizperiode) bzw. Eintrag (in der heißen Jahreszeit) über die Bausteine bzw. über die aus diesen errichteten Elemente zu reduzieren.

Es ist daher Aufgabe der Erfindung, ein Verfahren anzugeben, mit dem bei einem Bausteinen aus einem Kalzium-Silikat-Material die Wärmeleitfähigkeit noch weiter reduziert werden kann, ohne dass sich die statischen Eigenschaften der Bausteine wesentlich verändern. Ferner soll ein Baustein mit entsprechend verbesserten Eigenschaften angegeben werden.

Zur Lösung dieser Aufgabe wird zunächst ein Verfahren mit den Merkmalen des Anspruches 1 angegeben. Vorteilhafte Weiterbildungen dieses Verfahrens sind in den abhängigen Ansprüchen 2 und 3 genannt.

Einen Baustein, der die genannte Aufgabe löst, weist erfindungsgemäß die in Anspruch 4 angegebenen Merkmale auf. Vorteilhafte Weiterbildungen des erfindungsgemäßen Bausteines sind in den abhängigen Ansprüchen 5 sowie 6 angegeben.

Wesentliche Idee der Erfindung ist es, während der Herstellung des Bausteines einem oder mehreren der Ausgangsmaterialien und/oder einem Zwischenprodukten Partikel eines mikro- oder nanoporösen Materials zuzugeben, die dann bei der weiteren Herstellung des Bausteines in diesen eingebunden werden.

Es hat sich nämlich herausgestellt, dass durch den Einsatz derartiger Partikel in der Herstellung und die Einbindung derselben in den fertigen Baustein Bausteine aus einem Kalzium-Silikat-Material erhalten werden können, die verglichen mit verfahrensgleich, jedoch ohne die Partikel des mikro- bzw. nanoporösen Materials hergestellten Bausteinen eine deutlich verringerte Wärmeleitfähigkeit, aufweisen. SO konnten z.B. bei erfindungsgemäß hergestelltem Porenbetonstein in der Dichteklasse P4 (Dichten von 500 kg/m²) Wärmeleitfähigkeiten von λ = 0,07 W/(m*K) erreicht werden, verglichen mit einer Wärmeleitfähigkeit von λ = 0,09 W/(m*K) bei verfahrensgleich, jedoch ohne Zusatz der Partikel des mikro- oder nanoporösen Materials hergestellten Porenbetonbausteinen. Diese Reduzierung der Wärmeleitfähigkeit um etwa ¼ wurde bereits in einem ersten Versuch und ohne weitere Optimierung hinsichtlich der Menge der Zusatzstoffe oder einer eventuell angepassten Abänderung des Herstellungsverfahrens erreicht. Eine solche Absenkung der Wärmeleitfähigkeit der Bausteine bedingt ein wesentlich besseres wärmeisolierendes verhalten der Bausteine und hilft somit den Energieverbrauch pro umbauten m³ eines mit solchen Bausteinen errichteten Hauses gegenüber einem vergleichbaren, aus üblichen Bausteinen errichteten Haus deutlich zu senken. Dies betrifft sowohl die im Winter erforderliche Energie zum Beheizen des Hauses als auch eventuell im Sommer erforderliche Energie für die Klimatisierung.

Als geeignetes mikro- oder nanoporöses Material hat sich mikro- bzw. nanoporöse Kieselsäure, insbesondere pyrogene Kieselsäure, herausgestellt. Dieses Material ist kostengünstig zu erhalten und kann insbesondere auch bei der Herstellung autoklavierter Porenbetonsteine verwendet werden, da es den Prozess des Autoklavierens schadlos übersteht und in die Matrix des Kalzium-Silikat-Materials eingebunden wird.

Alternativ ist es möglich, als mikro- oder nanoporöses Material z.B. Zeolith-Material zu verwenden (vgl. Anspruch 3).

Mit der Erfindung wird neben einem Verfahren zur Reduzierung der Wärmeleitfähigkeit von Bausteinen aus einem Kalzium-Silikat-Material auch ein neuartiger Baustein aus einem solchen Material gegeben, der sich durch eine deutlich reduzierte Wärmeleitfähigkeit auszeichnet. Erfindungsgemäß enthält dieser in der Grundmatrix eingebundene Partikel aus einem mikro- oder nanoporösen Material.

Diese Partikel sind vorzugsweise solche aus insbesondere pyrogener Kieselsäure (vgl. Anspruch 5). Alternativ können die Partikel auch aus einem Zeolith oder einem anderen geeigneten, mikro- oder nanoporösen Material bestehen.

Mit Vorteil sind die Partikel des mikro- oder nanoporösen Materials homogen über das Volumen des Bausteins verteilt. Nachfolgend wird die Erfindung anhand eines Versuchsbeispiels näher erläutert, ohne dass sie auf die konkrete Rezeptur dieses Beispiels beschränkt wäre.

In einem Versuch zur Herstellung eines Porenbetonsteines mit reduzierter Wärmeleitfähigkeit wurde ein Porenbetonstein der Rohdichteklasse 0,55 nach einem üblichen Herstellungsverfahren in einem Autoklavierungsprozess hergestellt. Als Ausgangsmaterialien wurden folgende Materialien in den angegebenen Mengen verwendet:

| | |
|---|---|
| Sand- bzw. Quarzmehl (Teilchengröße > 90 µm) | 345 kg/m³ |
| Zement | 110 kg/m³ |
| Kalk | 50 kg/m³ |
| Aluminiumpulver | 0,5 kg/m³ |
| Wasser | |

Dieser einem üblichen Herstellungsverfahren für Porenbeton der Rohdichteklasse 0,5 entlehnten Rezeptur wurden in der Ausgangsmasse zusätzlich 35 kg/m³ pyrogene Kieselsäure in Form von mikroporösen Teilchen zugesetzt. Ferner wurde wegen des Viskositätsanstiegs nach der Zugabe, der mikroporösen Kieselsäure ein Fließmittel auf Polycarboxylatether-Basis beigegeben.

Dieses Material wurde in der üblichen Weise zu einem Grünkuchen geformt, im Grünkuchen geschnitten und in einem Autoklav ausgehärtet.

Die nach dieser Rezeptur erhaltenen Porenbetonsteine hatten gegenüber Vergleichswerten analog produzierter Porenbetonsteine ohne Zugabe der pyrogenen Kieselsäure eine um etwa ¾ reduzierte Wärmeleitfähigkeit.

Als weiterer vorteilhafter Aspekt hat sich herausgestellt, **dass** im Verlaufe des oben beschriebenen versuchsbeispiels das Material bereits nach zwei Stunden Verbleibens in der Form die zum Schneiden erforderliche Grünstandsfestigkeit hatte, was bei einem vergleichbaren Ablauf des Verfahrens in der klassischen Weise, ohne Zugabe der pyrogenen Kieselsäure erst nach 6 Stunden der Fall war. Auf diese Weise konnte in dem oben skizzierten Versuch die Gesamtherstellungszeit einer Bausteincharge sogar überraschend noch um 4 Stunden reduziert werden.

Erste Messungen der Oberfläche nach dem BET-Verfahren an dem nach dem oben beschriebenen Versuch erhaltenen Material haben eine Oberfläche von 51 m²/g ergeben. Vergleichbares Material, welches ohne Zusatz der pyrogenen Kieselsäure erhalten wurde, zeigte bei einer Vergleichsmessung einen Wert von 34 m²/g. Durch den Zusatz des nano- bzw. mikroporösen Materials konnte somit eine signifikante Erhöhung der Oberfläche (um 50%) erreicht werden, die die geringere Wärmeleitfähigkeit aufgrund deutlich reduzierter Konvektion erklärt.

## Patentansprüche

1. Verfahren zur Reduzierung der Wärmeleitfähigkeit von Bausteinen aus einem Kalzium-Silikat-Material, insbesondere von Porenbetonsteinen, **dadurch gekennzeichnet, dass** in die Bausteine Partikel eines mikro- oder nanoporösen Materials eingebracht werden, welche während der Herstellung der Bausteine einem oder mehreren der Ausgangsmaterialien und/oder einem oder mehreren Zwischenprodukten zugegeben und so bei einer nachfolgenden Herstellung der fertigen Bausteine in diese eingebunden werden.

2. Verfahren nach Anspruch 1, **dadurch gekennzeichnet, dass** als mikro- oder nanoporöses Material mikro- bzw. nanoporöse Kieselsäure, vorzugsweise pyrogene Kieselsäure, verwendet wird.

3. Verfahren nach Anspruch 1, **dadurch gekennzeichnet, dass** als mikro- oder nanoporöses Material ein Zeolith verwendet wird.

4. Baustein aus einem Kalzium-Silikat-Material, vorzugsweise aus Porenbeton, **dadurch gekennzeichnet, dass** er in der Grundmatrix eingebundene Partikel aus einem mikro- oder nanoporösen Material enthält.

5. Baustein nach Anspruch 4, **dadurch gekennzeichnet, dass** die Partikel aus mikro- oder nanoporösem Material solche aus_mikro- oder nanoporöser, vorzugsweise pyrogener, Kieselsäure sind.

6. Baustein nach einem der Ansprüche 4 oder 5, **dadurch gekennzeichnet, dass** die Partikel des mikro- oder nanoporösen Materials homogen über das Volumen des Bausteins verteilt sind.
